## Europäisches Patentamt

## European Patent Office

## Office européen des brevets

(11) Publication number: **0 194 391 B1**

(12) **EUROPEAN PATENT SPECIFICATION**

(45) Date of publication of patent specification: **21.06.89**

(51) Int. Cl.⁴: **C 23 C 30/00,** C 23 C 4/08, C 22 C 19/05

(21) Application number: **85400477.7**

(22) Date of filing: **13.03.85**

(54) **Yttrium and yttrium-silicon bearing nickel-base superalloys especially useful as compatible coatings for advanced superalloys.**

(43) Date of publication of application:
**17.09.86 Bulletin 86/38**

(45) Publication of the grant of the patent:
**21.06.89 Bulletin 89/25**

(84) Designated Contracting States:
**DE FR GB IT NL SE**

(56) References cited:
**FR-A-2 143 065**
**FR-A-2 284 683**
**FR-A-2 457 907**
**FR-A-2 503 189**
**US-A-4 459 160**

(73) Proprietor: **GENERAL ELECTRIC COMPANY**
**1 River Road**
**Schenectady New York 12305 (US)**

(72) Inventor: **Goldman, Edward Harvey**
**8339 Marley**
**Cincinnati Ohio 45216 (US)**

(74) Representative: **Catherine, Alain**
**General Electric France Service de Propriété**
**Industrielle 18 Rue Horace Vernet B.P. 76**
**F-92134 Issy-les-Moulineaux Cedex (FR)**

Courier Press, Leamington Spa, England.

EP 0 194 391 B1

# EP 0 194 391 B1

**Description**

This invention pertains generally to nickel-base superalloys useful in the manufacture of hot-section components of aircraft gas turbine engines, e.g., vanes and rotating blades, and more particularly to yttrium and yttrium-silicon bearing compatible coatings especially useful for the enhancement of the environmental resistance of such hot-section components made from advanced nickel-base superalloys and nickel-base eutectic superalloys.

Vanes and rotating blades cast conventionally from nickel-base superalloys typically consist of equiaxed nonoriented grains. Recognizing the effects of grain boundaries on high temperature mechanical properties, much effort has been expended to improve the properties of such vanes and blades by strengthening the grain boundaries through the addition of grain boundary strengtheners, such as boron and zirconium, elimination of grain boundaries transverse to the major stress axis, or elimination of grain boundaries altogether.

By the use of directional solidification (DS) as is described, for example, in US—A—4,202,400; it is possible to produce parts such as vanes and rotating blades having an oriented microstructure of columnar grains whose major axis is parallel to the major stress axis of the parts and which have few or no grain boundaries perpendicular to the major stress axis. A further advance has been to use directional solidification techniques to produce vanes and rotating blades as single crystals, thus eliminating high angle grain boundaries and orienting low angle grain boundaries parallel to the major stress axis while minimizing the presence of low angle grain boundaries.

Yet another advance in materials for high temperature gas turbines are the advanced nickel-base eutectic superalloys such as the monocarbide reinforced nickel-base eutectic superalloys of the type described, for example, in US—A—4,292,076.

The superalloys of US—A—4,292,076, when directionally solidified under stringent conditions to achieve planar front solidification, result in a eutectic composite microstructure consisting of strong, reinforcing metallic carbide (MC) fibers in a $\gamma/\gamma'$ nickel-base superalloy matrix. Because highly aligned anisotropic microstructures are formed during planar front solidification, the superalloys of US—A—4,292,076 offer potential structural stability and property retention to a greater fraction of their solidification temperatures than do other materials.

In order to take full temperature advantage of the advanced nickel-base superalloys and nickel-base eutectic superalloys, however, coatings are required to provide environmental protection at the high intended use temperatures. Stringent requirements are placed on the coatings and the coating/substrate composite. For example, the coatings must be tightly bonded, i.e., metallurgically bonded, to the substrate and ideally must not degrade either the mechanical properties of the substrate (e.g., ductility, stress rupture strength and resistance to thermal fatigue) or the chemical properties of the substrate (e.g., oxidation resistance and hot corrosion resistance).

Examples of adverse effects to eutectic superalloys which have resulted from prior art incompatible coatings are fiber denudation near the coating/substrate interface due to outward diffusion of carbon from the fibers into the coating and the formation of brittle precipitates, generally in the form of needle-like platelets, in the substrate due to interdiffusion of elements between the coating and the substrate. Similarly, zones denuded of the gamma prime ($\gamma'$) strengthening phase and formation of brittle precipitates have been observed in single crystal nickel-base superalloys due to the use of incompatible coatings.

While many coatings and barrier/coating systems have been proposed and tried, there has been a general inability in the past to specify coatings or barrier/coating systems which are truly compatible with advanced nickel-base superalloy and nickel-base eutectic superalloy substrates, i.e., offer improved environmental protection and produce good metallurgical bonds with the substrate yet not degrade the mechanical or chemical properties of the substrate.

Therefore, there exists a need for protective environmental coatings which are truly compatible with the newest generation of nickel-base superalloys and nickel-base eutectic superalloys, particularly those designed for use as vanes and rotating blades in aircraft gas turbine engines.

There is provided by the present invention two nickel-base superalloys which are chemically and mechanically compatible with advanced nickel-base superalloys and nickel-base eutectic superalloys and which possess excellent resistance to high temperature oxidation. The alloys of the invention are, therefore, particularly useful as a protective environmental coating for the external surfaces of hot stage aircraft gas turbine engine components, e.g., rotating blades and stationary vanes, made from advanced nickel-base superalloys and nickel-base eutectic superalloys.

Broadly, the yttrium-bearing superalloy of the invention consists of, by weight, 1 to 10% cobalt, 6 to 12% chromium, 5 to 8% aluminum, 1 to 10% tantalum, 1 to 10% tungsten, 0 to 3% rhenium, 0 to 2% molybdenum, 0.1 to 2% hafnium, 0.005 to 0.1% boron, 0.005 to 0.25% carbon, 0.01 to 1.0% yttrium the balance being nickel and incidental impurities.

Also, broadly, the yttrium-silicon bearing superalloy of the invention consists of, by weight, 1—10% cobalt, 6 to 12% chromium, 5 to 8% aluminum, 1 to 10% tantalum, 1 to 10% tungsten, 0 to 3% rhenium, 0 to 2% molybdenum, 0.1 to 2% hafnium, 0.005 to 0.1% boron, 0.005 to 0.25% carbon 0.01 to 1.0% yttrium, 0.5 to 2.5% silicon, the balance being nickel and incidental impurities.

While it is contemplated that the above-described novel superalloys will be applied most frequently as

2

protective environmental coatings to provide at least a portion of the outer surface of gas turbine engine components and articles, it has also been found that the novel alloys of this invention are useful as thicker, built-up deposits applied to selected regions of substrates, such as aircraft gas turbine engine components, for repair purposes, or as the tip portion of rotating blades. Such applications then, contemplate composite articles of manufacture having as a substrate an article, such as a gas turbine engine airfoil, made of a nickel-base superalloy or nickel-base eutectic superalloy and one or more thick, built-up regions contiguous with, i.e., joined to and forming an integral part of, the substrate wherein the one or more regions comprise at least a portion of the outer surface of the composite article and are of one of the above-described novel superalloy compositions.

Figure 1 is a photomicrograph at 300× of a NiCoCrAlY type coating as-deposited on an N-type nickel-base single crystal superalloy substrate;

Figure 2 is a photomicrograph at 300× of a NiCoCrAlY type coating on an N-type substrate following exposure of 375 hours at 1135°C (2075°F) in an oxidation test;

Figure 3 is a photomicrograph at 300× of the 6MY alloy of the invention as-deposited as a coating on an N-type substrate by the LPPD process;

Figure 4 is a photomicrograph at 300× of the 6MY alloy of the invention on an N-type substrate after exposure of 511 hours at 1135°C (2075°F) in an oxidation test;

Figure 5 is a photomicrograph at 300× of the 6MYSi alloy of the invention as-deposited as a coating on an N-type substrate by the LPPD process; and

Figure 6 is a photomicrograph at 300× of the 6MYSi alloy of the invention on an N-type substrate following exposure of 476 hours at 1135°C (2075°F) in an oxidation test.

As set forth in the foregoing summary, the present invention relates to nickel-base superalloys which are chemically and mechanically compatible with advanced nickel-base superalloys and nickel-base eutectic superalloys and which possess excellent resistance to high temperature oxidation. The yttrium-bearing superalloys of the invention consist essentially of cobalt, chromium, aluminum, tantalum, tungsten, rhenium, molybdenum, hafnium, boron, carbon and yttrium in the percentages (by weight) set forth in Table I below, the balance being nickel and incidental impurities.

TABLE I

| Alloy compositions (weight %) | | | |
|---|---|---|---|
| Elements | Base | Preferred | More preferred |
| Co | 1—10% | 1—6% | 3.8—4.2% |
| Cr | 6—12% | 7—10% | 8.3—8.7% |
| Al | 5—8% | 5—7% | 5.8—6.2% |
| Ta | 1—10% | 4—6% | 4.7—5.3% |
| W | 1—10% | 3.5—5.5% | 4.2—4.8% |
| Re | 0—3% | 0—3% | 1.2—1.8% |
| Mo | 0—2% | 0—2% | 1.3—1.7% |
| Hf | 0.1—2% | 0.5—1.5% | 0.7—1.1% |
| B | 0.005—0.1% | 0.005—0.025% | 0.005—0.02% |
| C | 0.005—0.25% | 0.005—0.25% | 0.005—0.2% |
| Y | 0.01—1.0% | 0.05—0.5% | 0.2—0.4% |

The yttrium-silicon bearing superalloy of the invention consists essentially of cobalt, chromium, aluminum, tantalum, tungsten, rhenium, molybdenum, hafnium, boron, carbon, yttrium, and silicon in the percentages (by weight) set forth in Table II below, the balance being nickel and incidental impurities.

TABLE II

| Alloy compositions | | | |
| --- | --- | --- | --- |
| Elements | Base | Preferred | More preferred |
| Co | 1—10% | 1—6% | 3.8—4.2% |
| Cr | 6—12% | 7—10% | 8.3—8.7% |
| Al | 5—8% | 5—7% | 5.8—6.2% |
| Ta | 1—10% | 4—6% | 4.7—5.3% |
| W | 1—10% | 3.5—5.5% | 4.2—4.8% |
| Re | 0—3% | 0—3% | 1.2—1.8% |
| Mo | 0—2% | 0—2% | 1.3—1.7% |
| Hf | 0.1—2% | 0.5—1.5% | 0.7—1.1% |
| B | 0.005—0.1% | 0.005—0.025% | 0.005—0.02% |
| C | 0.005—0.25% | 0.005—0.25% | 0.005—0.2% |
| Y | 0.01—1.0% | 0.05—0.5% | 0.2—0.4% |
| Si | 0.5—2.5% | 0.5—1.5% | 0.8—1.2% |

The present alloys are particularly useful as protective environmental coatings, of between 0.05 mm and 2.54 mm (0.002 and 0.1 inches) in thickness, for the external surfaces of solid and hollow, fluid-cooled gas turbine engine components, e.g., rotating blades and stationary vanes, operating in the hot stage sections of such turbines and made from advanced nickel-base superalloys and nickel-base eutectic superalloys. While it is contemplated that the novel alloys herein described will most frequently be applied as protective environmental coatings to provide at least a portion of the outer surface of gas turbine engine components and articles, it has also been found that the superalloy of the invention is also useful as one or more thicker, built-up deposits applied to selected regions of such articles or component-like substrates.

Whether the novel alloys are deposited as coatings or thicker, built-up deposits, the utilization of plasma spray techniques to deposit the alloy of the invention is preferred. Most preferred is the technique, sometimes referred to as low pressure plasma deposition (LPPD), described in US—A—3,839,618.

Alloys in accordance with the present invention produce very dense coatings or deposits after plasma spraying and especially after plasma spraying by the above-mentioned LPPD process whereby as-deposited densities of 95% and greater are readily obtained.

The wide differences in the evaporation rates (or vapor pressures) between high vapor pressure elements like chromium, manganese or aluminum and low vapor pressure elements like tantalum or tungsten make the deposition and composition control of coatings of the novel alloys of this invention by other processes such as vacuum physical vapor deposition difficult, if not impossible. It will be appreciated, however, that process improvements or modifications in methods such as physical vapor deposition or ion plating could make coating by these methods possible, and the use of these methods is therefore contemplated. Additionally, techniques like sputtering, slurry sintering, or others may also be considered.

To illustrate the practice of the present invention, a series of coatings, hereinafter referred to as the "6MY" or 6MY-type coatings by way of designation, was produced by low pressure plasma deposition of a 6MY-type alloy of the invention, i.e., one consisting of, nominally by weight within normal melting tolerances, 4% Co, 8.5% Cr, 6% Al, 5% Ta, 4.5% W, 1.5% Re, 1.5% Mo, 0.9% Hf, 0.01% B, 0.05% C, and 0.3% Y, the balance nickel and incidental impurities, onto flat plate-like substrates and pin-like substrates for environmental testing.

Similarly, a series of coatings, hereinafter referred to as the "6MYSi" or 6MYSi-type coatings by way of designation, was produced by low pressure plasma deposition of a 6MYSi-type alloy of the invention, i.e., one consisting of, nominally by weight within normal melting tolerances, 4% Co, 8.5% Cr, 6% Al, 5% Ta, 4.5% W, 1.5% Re, 1.5% Mo, 0.9% Hf, 0.01% B, 0.05% C, 0.3% Y and 1.0% Si, the balance nickel and incidental impurities, onto flat plate-like substrates and pin-like substrates for environmental testing.

A nickel-base superalloy capable of being cast as a single crystal by directional solidification consisting of, by weight, 7 to 12% Cr, 1 to 5% Mo, 3 to 5% Ti, 3 to 5% Al, 5 to 15% Co, 3 to 12% W, 2 to 6% Ta, 0 to 10%

4

Re, 0 to 2% Nb, 0 to 3% V, 0 to 2% Hf, balance nickel and incidental impurities, further characterized by the substantial absence of C, B, and Zr and wherein the Al:Ti ratio is maintained in the range of 0.5 to 1 while maintaining the Cr:Al ratio in the range of 1.5 to 4 was used as the substrate and is hereinafter referred to as the "N" or N-type substrate for purposes of designation. More specifically, the composition of the substrate material was, nominally, by weight, 9.3% Cr, 7.5% Co, 3.7% Al, 4% Ta, 4.2% Ti, 1.5% Mo, 6% W, 0.5% Nb, the balance nickel plus incidental impurities.

For comparison, separate substrates of the above-described N-type were also provided with a coating typically used heretofore to enhance the resistance of such substrates to environmental degradation. In this case, the coating material selected was a NiCoCrAlY (Ni-23Co-18Cr-12.5Al-0.3Y) of the type described in US—A—3,928,026.

All coatings of the NiCoCrAlY type were deposited by a commercial vendor using the physical vapor deposition (PVD) process described in the aforementioned US—A—3,928,026.

Prior to coating deposition, the N-type substrates were solution treated at 1265.5°C (2310°F) for two hours irrespective of the coating to be applied. The process of applying the NiCoCrAlY type coatings has been described above. The 6MY and 6MYSi coatings were applied by the above-described LPPD plasma spray process using a commercially available standard external feed plasma spray gun and the process parameters of Table III.

TABLE III

| LPPD plasma spray process parameters (6MY and 6MYSi coatings on N-type substrates) | |
|---|---|
| Gun-to-substrate distance | (12—15 inches) 30.48—38.1 cm |
| Voltage | 50 volts nominal |
| Current | 800 amps nominal |
| Primary gas/rate | Argon/50 std. l./min. |
| Secondary gas/rate | Hydrogen/6 std. l./min. |
| Carrier gas/rate | Argon/1 std. l./min. |
| Powder feed rate | (10 lbs./hr.) 4.536 kg/h |
| Powder size | −400 mesh (37 μm) nominal |
| Chamber pressure | (30—40 torr) 31.1—53.2 hPa |

To optimize the properties of the substrates, all coated substrates were subjected to a post-deposition heat treatment which typically consisted of a first age at 1079.4°C (1975°F) for 4 hours followed by a second age at 898.9°C (1650°F) for 16 hours. At this stage, the coatings are referred to as "as-deposited" coatings. The structure of the N-type substrate following the aging treatments is one of $\gamma'$ precipitates in a $\gamma$ matrix.

Table IV presents the results of cyclic oxidation tests on pin-like specimens conducted under the conditions shown in the table using a natural gas flame at the velocities shown in the table. The specimens were rotated for uniform exposure and cycled out of the flame once per hour to cool the specimens to about 426.6°C (800°F). Failure is defined as penetration of the coating to the extent that base metal (substrate) oxidation begins to occur. Hot corrosion testing was conducted at 926.6°C (1700°) using a JP-5 fuel-fired flame with 5 ppm salt added to the combustion products. The specimens were rotated for uniform exposure and were cycled out of the flame once every hour.

TABLE IV

| Cyclic oxidation tests (N-type substrates) | | |
|---|---|---|
| Test conditions | Coating | Time to failure (hrs) |
| 1135°C (2075°F), (Mach 1.0) 331 m/s Gas velocity, cycled to 426.6°C (800°F) once/hr | NiCoCrAlY 6M 6MY 6MYSi | 500 325 500 500 |
| 1176.6°C (2150°F), (Mach 1.0) 331 m/s Gas velocity, cycled to 426.6°C (800°F) once/hr | NiCoCrAlY 6M 6MY 6MYSi | — 160 195 195 |

In the above-identified and cross-referenced application, "Nickel-Base Superalloys especially useful as Compatible Protective Environmental Coatings for Advanced Superalloys," filed concurrently herewith, the invention of truly compatible superalloy coatings for eutectic and single crystal nickel-base superalloys (6M-type) was disclosed and claimed. As evidenced, for example, by the small interaction zones formed between the 6M-type coating and substrates of eutectic and N-type nickel-base superalloys, the 6M-type coatings were physically and chemically compatible with those superalloy substrates. It has now been discovered that the addition of carefully controlled amounts of yttrium or mixtures of yttrium and silicon markedly improve upon the otherwise excellent oxidation resistance of the 6M-type alloys without adversely affecting the physical and chemical compatibility of those alloys with nickel-base superalloy substrates. The data of Table IV show that the addition of yttrium or yttrium plus silicon, the resistance of the alloys of this invention to oxidation is improved over that of the 6M-type alloys, by about 50% and 20% at 1135°C (2075°F) and 1176.6°C (2150°F), respectively, and is about the same as that of the base-line NiCoCrAlY coating. In the hot corrosion tests, on N-type substrates, the 6MY and 6MYSi coatings had lives of about 785 and 1000 hours, respectively. Thus, it was discovered that the Si-containing 6MYSi coating had a life about 40% greater than that of the 6MY coating. Although having lower resistance to hot corrosion than NiCoCrAlY, the alloys of the invention as coatings provide acceptable hot corrosion protection.

The coated specimens were evaluated metallographically to determine the extent of interaction between the coatings and the substrates. The results are given in Table V which lists the extent, if any, of the denuded and platelet formation zones, the sum of which comprise the interaction zone, following exposure in the oxidation tests at the temperatures and for the time shown. Denuded zones in N-type substrates are zones which have been depleted of γ' due to the diffusion of elements from the substrate to the coating, leaving a weakened, primarily γ' matrix. Platelets, when formed, are a result of the interdiffusion of elements between the coating and the substrates, i.e., are evidence of a chemical incompatibility between the coating and the substrate.

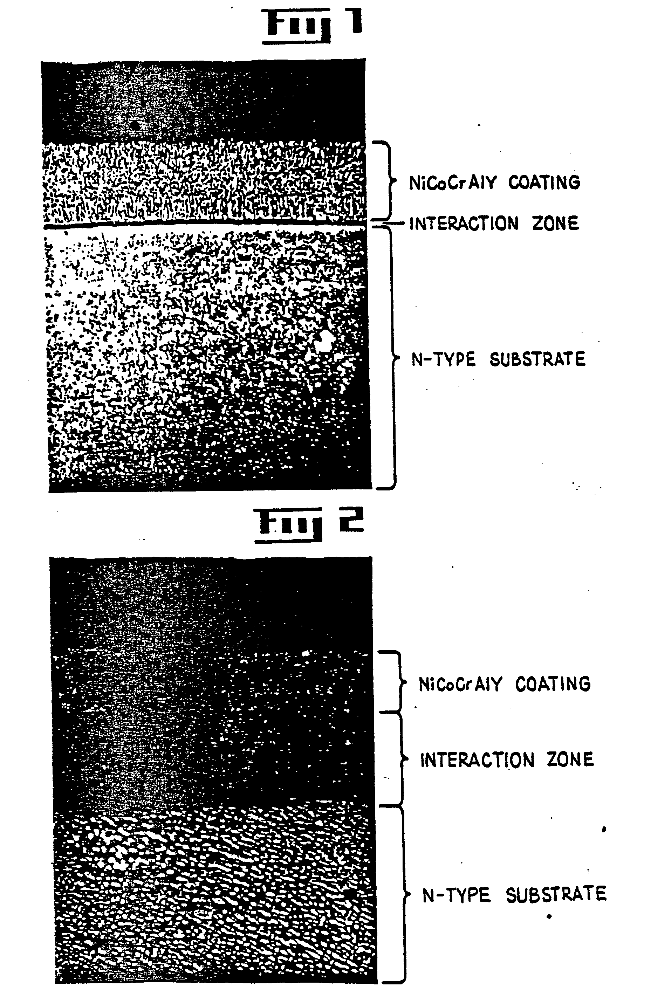

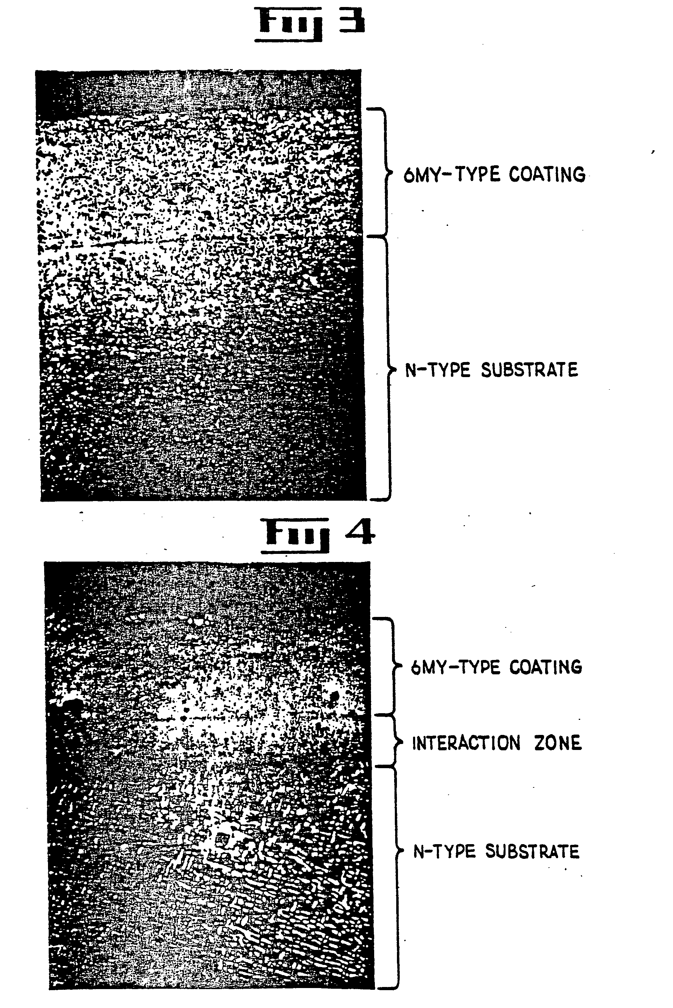

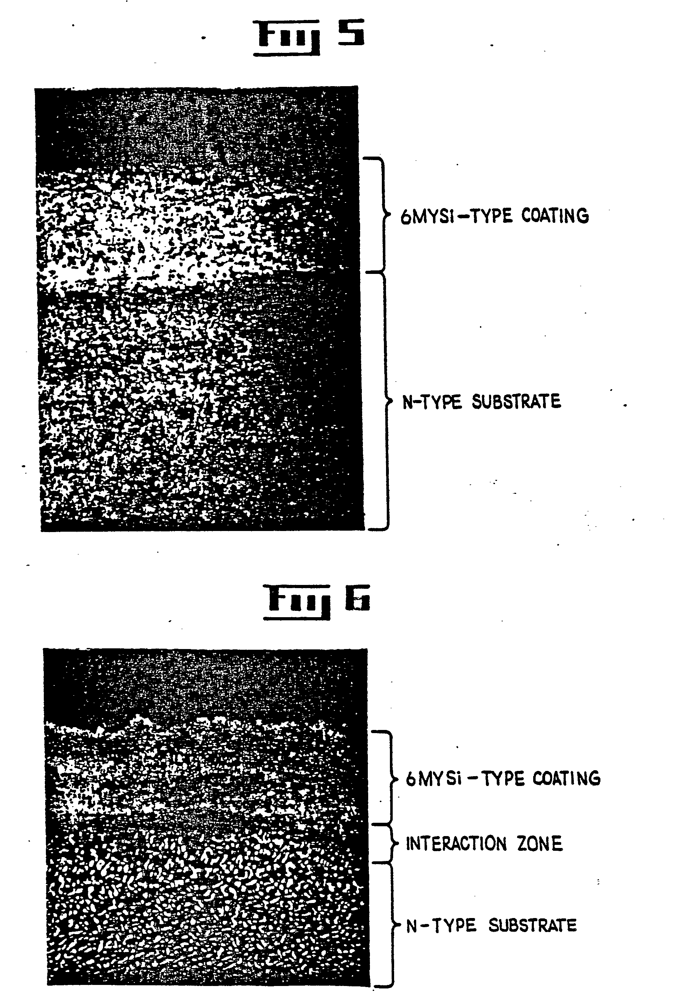

Reference to Figures 3 and 5 show that in the as-deposited condition there is virtually no interaction zone formed between the 6MY and 6MYSi-type coatings and the N-type substrate. A slight interaction zone, however, is evident in Figure 1 between the NiCoCrAlY coating and the N-type substrate.

Reference to Figures 2, 4 and 6, and Table V, shows that after 375 hours exposure at 2075°F in the oxidation test an interaction zone has formed between the NiCoCrAlY coating and the N-type substrate which is at least twice as deep as the interaction zone formed between the 6MY and 6MYSi-type coatings and the N-type substrate, even though the 6MY/N-type and 6MYSi/N-type pairs were tested for at least about a 25% longer period of time.

TABLE V

| Average depth of interaction zone following oxidation testing | | | | |
|---|---|---|---|---|
| Coating/ substrate | Exposure (hrs./°F) h/°C | Denuded (mils) mm | Platelet (mils) mm | Total (mils) mm |
| NiCoCrAlY/N | (375/2075) 375/1135°C | (3.2) 0.081 | (0) 0 | (3.2) 0.081 |
| 6MY/N | (511/2075) 511/1135 | (1.5) 0.0381 | (0) 0 | (1.5) 0.0381 |
| 6MYSi/N | (476/2075) 476/1135 | (1.0) 0.0254 | (0) 0 | (1.0) 0.0254 |

In addition to the unique combination of improved environmental resistance and reduced diffusional interaction, the alloys of the invention also possess high temperature strength superior to NiCoCrAlY. Elevated temperature tensile tests on very thick (1/2 inch y-12.7 mm deposits of the NiCoCrAlY, 6MY, and 6MYSi-type alloys showed that at 982.2°C (1800°F) the ultimate tensile strength (UTS) of the alloys was about 7, 38, and 41 Ksi, respectively, while at 1093.3°C (2000°F) the UTS of the alloys was about 120.4, 96.46 and 82.68 MPa (3, 14 and 12 Ksi), respectively.

The high strengths of the alloys of the invention are expected to result in greatly improved resistance to thermal/mechanical fatigue cracking.

Since the alloys of the invention are themselves superalloys, the difference in the coefficient of thermal expansion (α) between the alloys of the invention and nickel-base superalloy substrates are less than that between NiCoCrAlY and the same superalloy substrates. The smaller difference in α reduces the stresses imposed on a coating alloy in service and thereby reduces the propensity for coating spallation and thermal fatigue cracking.

Thus, the low propensity of the alloys of the invention to form interaction zones, and particularly their low propensity to form platelets, plus their high strength and thermal expansion compatibility with nickel-base superalloy substrates makes the alloys of the invention coatings which are truly chemically and physically compatible with nickel-base superalloy substrates in addition to providing the environmental resistance required in severe high pressure, high temperature turbine environments.

It has also been found that the novel alloys of this invention are useful as thicker, built-up deposits applied to selected regions of aircraft gas turbine engine components, such as the tip portions of rotating blades or stationary vanes, or for purposes of repairing nicked or damaged regions as typically occur on such components as airfoils. In this respect, the alloys of the invention are more in the nature of a superalloy from which components are made, e.g., structural or weight-carrying alloys, and less in the nature of coatings. The changes required in the plasma spraying process to effect the build-up of thicker deposits, as opposed to thin coatings, are well within the knowledge and expertise of those ordinarily skilled in the plasma spraying arts.

**Claims**

1. A composition for application to nickel-base superalloy substrates consisting of, by weight, 1 to 10% cobalt, 6 to 12% chromium, 5 to 8% aluminum, 1 to 10% tantalum, 1 to 10% tungsten, 0 to 3% rhenium, 0 to 2% molybdenum, 0.1 to 2% hafnium, 0.005 to 0.1% boron, 0.005 to 0.25% carbon, 0.01 to 1.0% yttrium, the balance nickel and incidental impurities.

2. The composition of claim 1 consisting of, by weight, 1 to 6% cobalt, 7 to 10% chromium, 5 to 7% aluminum, 4 to 6% tantalum, 3.5 to 5.5% tungsten, 0 to 3% rhenium, 0 to 2% molybdenum, 0.5 to 1.5% hafnium, 0.005 to 0.025% boron, 0.005 to 0.25% carbon, 0.05 to 0.5% yttrium, the balance nickel and incidental impurities.

3. The composition of claim 2 consisting of, by weight, 3.8 to 4.2% cobalt, 8.3 to 8.7% chromium, 5.8 to 6.2% aluminum, 4.7 to 5.3% tantalum, 4.2 to 4.8% tungsten, 1.2 to 1.8% rhenium, 1.3 to 1.7% molybdenum, 0.7 to 1.1% hafnium, 0.005 to 0.02% boron, 0.005 to 0.2% carbon, 0.2 to 0.4% yttrium, the balance nickel and incidental impurities.

4. A composition for application to nickel-base superalloy substrates consisting of, by weight, 1 to 10% cobalt, 6 to 12% chromium, 5 to 8% aluminum, 1 to 10% tantalum, 1 to 10% tungsten, 0 to 3% rhenium, 0 to 2% molybdenum, 0.1 to 2% hafnium, 0.005 to 0.1% boron, 0.005 to 0.25% carbon, 0.01 to 1.0% yttrium, 0.5 to 2.5% silicon, the balance nickel and incidental impurities.

5. The composition of claim 4 consisting of, by weight, 1 to 6% cobalt, 7 to 10% chromium, 5 to 7% aluminum, 4 to 6% tantalum, 3.5 to 5.5% tungsten, 0 to 3% rhenium, 0 to 2% molybdenum, 0.5 to 1.5% hafnium, 0.005 to 0.025% boron, 0.005 to 0.25% carbon, 0.05 to 0.5% yttrium, 0.5 to 1.5% silicon, the balance nickel and incidental impurities.

6. The composition of claim 5 consisting of, by weight, 3.8 to 4.2% cobalt, 8.3 to 8.7% chromium, 5.8 to 6.2% aluminum, 4.7 to 5.3% tantalum, 4.2 to 4.8% tungsten, 1.2 to 1.8% rhenium, 1.3 to 1.7% molybdenum, 0.7 to 1.1% hafnium, 0.005 to 0.02% boron, 0.005 to 0.2% carbon, 0.2 to 0.4% yttrium, 0.8 to 1.2% silicon, the balance nickel and incidental impurities.

7. A high temperature oxidation and corrosion resistant coated nickel-base superalloy article characterized by high coating-substrate compatibility, said article comprising:

(a) a nickel-base superalloy or nickel-base eutectic superalloy substrate, and

(b) a coating providing at least a portion of the outer surface of said article, the composition of said coating being that of any one of claims 1 to 6.

8. The article of claim 7 wherein said substrate comprises an improved nickel-base superalloy capable of being cast as a single crystal by directional solidification consisting of, by weight, 7 to 12% chromium, 1 to 5% molybdenum, 3 to 5% titanium, 3 to 5% aluminum, 5 to 15% cobalt, 3 to 12% tungsten, 2 to 6% tantalum, 0 to 10% rhenium, 0 to 2% niobium, 0 to 3% vanadium, 0 to 2% hafnium, the balance nickel and incidental impurities, further characterized by the substantial absence of carbon, boron, and zirconium, the alloy having an Al:Ti ratio in the range of 0.5 to 1 while maintaining the Cr:Al ratio in the range of 1.5 to 4.

9. The article of claim 8 wherein said substrate consists of, by weight, about 9.3% chromium, 7.5% cobalt, 3.7% aluminum, 4% tantalum, 4.2% titanium, 1.5% molybdenum, 6% tungsten, 0.5% niobium, the balance nickel and incidental impurities.

10. A composite article of manufacture comprising:

(i) a nickel-base superalloy or nickel-base eutectic superalloy substrate, and

(ii) one or more thick, built-up regions integral with said substrate, said regions providing at least a portion of the outer surface of said article, the composition of said regions being that of any one of claims 1 to 6.

11. The article of claim 10 wherein said substrate comprises an improved nickel-base superalloy capable of being cast as a single crystal by directional solidification consisting of, by weight, 7 to 12% chromium, 1 to 5% molybdenum, 3 to 5% titanium, 3 to 5% alumimum, 5 to 15% cobalt, 3 to 12% tungsten, 2 to 6% tantalum, 0 to 10% rhenium, 0 to 2% niobium, 0 to 3% vanadium, 0 to 2% hafnium, balance nickel and incidental impurities, further characterized by the substantial absence of carbon, boron, and zirconium, the alloy having an Al:Ti ratio in the range of 0.5 to 1 while maintaining the Cr:Al ratio in the range of 1.5 to 4.

12. The article of claim 11 wherein said substrate consists of, by weight, about 9.3% chromium, 7.5% cobalt, 3.7% aluminum, 4% tantalum, 4.2% titanium, 1.5% molybdenum, 6% tungsten, 0.5% niobium, the balance nickel and incidental impurities.

13. The article of claim 10 wherein said substrate is an aircraft gas turbine engine rotatable blade or stationary vane and said deposit is the tip portion thereof.

## Patentansprüche

1. Zusammensetzung zum Aufbringen auf Nickel-Basis-Superlegierungs-Substrate, bestehend aus, bezogen auf das Gewicht, 1 bis 10% Kobalt, 6 bis 12% Chrom, 5 bis 8% Aluminium, 1 bis 10% Tantal, 1 bis 10% Wolfram, 0 bis 3% Rhenium, 0 bis 2% Molybdän, 0,1 bis 2% Hafnium, 0,005 bis 0,1% Bor, 0,005 bis 0,25% Kohlenstoff, 0,01% bis 1,0% Yttrium, Rest Nickel und übliche Verunreinigungen.

2. Zusammensetzung nach Anspruch 1, bestehend aus, bezogen auf das Gewicht, 1 bis 6% Kobalt, 7 bis 10% Chrom 5 bis 7% Aluminium, 4 bis 6% Tantal, 3,5 bis 5,5% Wolfram, 0 bis 3% Rhenium, 0 bis 2% Molybdän, 0,5 bis 1,5% Hafnium, 0,005 bis 0,025% Bor, 0,005% bis 0,25% Kohlenstoff, 0,05 bis 0,5% Yttrium, Rest Nickel und übliche Verunreinigungen.

3. Zusammensetzung nach Anspruch 2, bestehend aus, bezogen auf das Gewicht, 3,8 bis 4,2% Kobalt, 8,3 bis 8,7% Chrom, 5,8 bis 6,2% Aluminium, 4,7 bis 5,3% Tantal, 4,2 bis 4,8% Wolfram, 1,2 bis 1,8% Rhenium, 1,3 bis 1,7% Molybdän, 0,7 bis 1,1% Hafnium, 0,005 bis 0,02% Bor, 0,005 bis 0,2% Kohlenstoff, 0,2 bis 0,4% Yttrium, Rest Nickel und übliche Verunreinigungen.

4. Zusammensetzung zum Aufbringen auf Nickel-Basis-Superlegierungs-Substrate, besthend aus, bezogen auf das Gewicht, 1 bis 10% Kobalt, 6 bis 12% Chrom, 5 bis 8% Aluminium, 1 bis 10% Tantal, 1 bis 10% Wolfram, 0 bis 3% Rhenium, 0 bis 2% Molybdän, 0,1 bis 2% Hafnium, 0,005 bis 0,1% Bor, 0,005 bis 0,25% Kohlenstoff, 0,01 bis 1,0% Yttrium, 0,5 bis 2,5% Silizium, Rest Nickel und übliche Verunreinigungen.

5. Zusammensetzung nach Anspruch 4, bestehend aus, bezogen auf das Gewicht, 1 bis 6% Kobalt, 7 bis 10% Chrom, 5 bis 7% Aluminium, 4 bis 6% Tantal, 3,5 bis 5,5% Wolfram, 0 bis 3% Rhenium, 0 bis 2% Molybdän, 0,5 bis 1,5% Hafnium, 0,005 bis 0,25% Bor, 0,005 bis 0,25% Kohlenstoff, 0,05 bis 0,5% Yttrium, 0,5 bis 1,5% Silizium, Rest Nickel und übliche Verunreinigungen.

6. Zusammensetzung nach Anspruch 5, bestehend aus, bezogen auf das Gewicht, 3,8 bis 4,2% Kobalt, 8,3 bis 8,7% Chrom, 5,8 bis 6,2% Aluminium, 4,7 bis 5,3% Tantal, 4,2 bis 4,8% Wolfram, 1,2 bis 1,8% Rhenium, 1,3 bis 1,7% Molybdän, 0,7 bis 1,1% Hafnium, 0,005 bis 0,02% Bor, 0,005 bis 0,2% Kohlenstoff, 0,2 bis 0,4% Yttrium, 0,8 bis 1,2% Silizium, Rest Nickel und übliche Verunreinigungen.

7. Bei hoher Temperatur oxidations- und korrosionsbeständiger überzogener Gegenstand aus Nickel-Basis-Superlegierung, gekennzeichnet durch eine hohe Überzugs-Substrat-Verträglichkeit, wobei der Gegenstand umfaßt:

(a) ein Nickel-Basis-Superlegierungs- oder eutektisches Nickel-Basis-Superlegierungs-Substrat, und

(b) einen Überzug, der mindestens einen Teil der äußeren Oberfläche des Gegenstands bildet, wobei die Zusammensetzung des Überzuges eine nach Anspruch 1 bis 6 ist.

8. Gegenstand nach Anspruch 7, worin das Substrat eine verbesserte Nickel-Basis-Superlegierung umfaßt, die durch gerichtete Erstarrung als Einkristall gegossen werden kann und bestehend aus, bezogen auf das Gewicht, 7 bis 12% Chrom, 1 bis 5% Molybdän, 3 bis 5% Titan, 3 bis 5% Aluminium, 5 bis 15% Kobalt, 3 bis 12% Wolfram, 2 bis 6% Tantal, 0 bis 10% Rhenium, 0 bis 2% Niob, 0 bis 3% Vanadium, 0 bis 2% Hafnium, Rest Nickel und übliche Verunreinigungen, weiter dadurch gekennzeichnet, daß Kohlenstoff, Bor und Zirkonium im wesentlichen abwesend sind, die Legierung ein Al zu Ti-Verhältnis im Bereich von 0,5 bis 1 hat, während das Cr zu Al-Verhältnis im Bereich von 1,5 bis 4 gehalten ist.

9. Gegenstand nach Anspruch 8, worin das Substrat besteht aus, bezogen auf das Gewicht, etwa 9,3% Chrom, 7,5% Kobalt, 3,7% Aluminium, 4% Tantal, 4,2% Titan, 1,5% Molybdän, 6% Wolfram, 0,5% Niob, Rest Nickel und übliche Verunreinigungen.

10. Verbundgegenstand, umfassend:

(i) ein Nickel-Basis-Superlegierungs- oder eutektisches Nickel-Basis-Superlegierungs-Substrat und

(ii) einen oder mehrere dicke, aufgebaute Bereiche, integral mit dem Substrat, wobei diese Bereiche mindestens einen Teil der äußeren Oberfläche des Gegenstandes darstellen und die Zusammensetzung dieser Bereiche eine solche nach einem der Ansprüche 1 bis 6 ist.

11. Gegenstand nach Anspruch 10, worin das Substrat eine verbesserte Nickel-Basis-Superlegierung umfaßt, die durch gerichtete Erstarrung als Einkristall gegossen werden kann und besteht aus, bezogen auf das Gewicht, 7 bis 12% Chrom, 1 bis 5% Molybdän, 3 bis 5% Titan, 3 bis 5% Aluminium, 5 bis 15% Kobalt, 3 bis 12% Wolfram, 2 bis 6% Tantal, 0 bis 10% Rhenium, 0 bis 2% Niob, 0 bis 3% Vanadium, 0 bis 2% Hafnium, Rest Nickel und übliche Verunreinigungen, weiter dadurch gekennzeichnet, daß Kohlenstoff, Bor u. Zirkonium im wesentlichen abwesend sind, die Legierung ein Al zu Ti-Verhältnis im Bereich von 0,5 bis 1 hat, während das Cr:Al-Verhältnis im Bereich von 1,5 bis 4 gehalten ist.

12. Gegenstand nach Anspruch 11, worin das Substrat besteht aus, bezogen auf das Gewicht, etwa 9,3% Chrom, 7,5% Kobalt, 3,7% Aluminium, 4% Tantal, 4,2% Titan, 1,5% Molybdän, 6% Wolfram, 0,5% Niob, der Rest Nickel und übliche Verunreinigungen.

13. Gegenstand nach Anspruch 10, worin das Substrat eine drehbare oder stationäre Schaufel einer Flugzeug-Gasturbine ist, und der Überzug sich auf deren Spitze befindet.

**Revendications**

1. Composition pour application à des substrats en superalliage à base de nickel, comprenant, en poids, de 1 à 10% de cobalt, de 6 à 12% de chrome, de 5 à 8% d'aluminium, de 1 à 10% de tantale, de 1 à 10% de tungstène, de 0 à 3% de rhénium, de 0 à 2% de molybdène, de 0,1 à 2% d'hafnium, de 0,005 à 0,1% de bore, de 0,005 à 0,25% de carbone, de 0,01 à 1,0% d'yttrium, le reste étant du nickel et des impuretés accidentelles.

2. Composition selon la revendication 1, constituée, en poids, de 1 à 6% de cobalt, de 7 à 10% de chrome, de 5 à 7% d'aluminium, de 4 à 6% de tantale, de 3,5 à 5,5% de tungstène, de 0 à 3% de rhénium, de 0 à 2% de molybdène, de 0,5 à 1,5% d'hafnium, de 0,005 à 0,025% de bore, de 0,005 à 0,25% de carbone, de 0,005 à 0,5% d'yttrium, le reste étant du nickel et des impuretés accidentelles.

3. Composition selon la revendication 2, comprenant, en poids, de 3,8 à 4,2% de cobalt, de 8,3 à 8,7% de chrome, de 5,8 à 6,2% d'aluminium, de 4,7 à 5,3% de tantale, de 4,2 à 4,8% de tungstène, de 1,2 à 1,8% de rhénium, de 1,3 à 1,7% de molybdène, de 0,7 à 1,1% d'hafnium, de 0,005 à 0,02% de bore, de 0,005 à 0,2% de carbone, de 0,2 à 0,4% d'yttrium, le reste étant du nickel et des impuretés accidentelles.

4. Composition pour application à des substrats en superalliage à base de nickel, comprenant, en poids de 1 à 10% de cobalt, de 6 à 12% de chrome, de 5 à 8% d'aluminium, de 1 à 10% tantale, de 1 à 10% de tungstène, de 0 à 3% de rhénium, de 0 à 2% de molybdène, de 0,1 à 2% d'hafnium, de 0,005 à 0,1% de bore, de 0,005 à 0,25% de carbone, de 0,01 à 1,0% d'yttrium, de 0,5 à 2,5% de silicium, le reste étant du nickel et des impuretés accidentelles.

5. Composition selon la revendication 4, comprenant, en poids, de 1 à 6% de cobalt, de 7 à 10% de chrome, de 5 à 7% d'aluminium, de 4 à 6% de tantale, de 3,5 à 5,5% de tungstène, de 0 à 3% de rhénium, de 0 à 2% de molybdène, de 0,5 à 1,5% d'hafnium, de 0,005 à 0,025% de bore, de 0,005 à 0,25% de carbone, de 0,05 à 0,5% d'yttrium, de 0,05 à 1,5% de silicium, le reste étant du nickel et des impuretés accidentelles.

6. Composition selon la revendication 5, comprenant, en poids, de 3,8 à 4,2% de cobalt, de 8,3 à 8,7% de chrome, de 5,8 à 6,2% d'aluminium, de 4,7 à 5,3% de tantale, de 4,2 à 4,8% de tungstène, de 1,2 à 1,8% de rhénium, de 1,3 à 1,7% de molybdène, de 0,7 à 1,1% d'hafnium, de 0,005 à 0,02% de bore, de 0,005 à 0,2% de carbone, de 0,2 à 0,4% d'yttrium, de 0,8 à 1,2% de silicium, le reste étant du nickel et des impuretés accidentelles.

7. Article en superalliage à base de nickel revêtu, résistant à l'oxydation et à la corrosion à haute température, caractérisé par une compatibilité élevée entre revêtement et substrat, l'article comportant:

9

(a) un substrat en superalliage à base de nickel et en superalliage eutectique à base de nickel et

(b) un revêtement fournissant au moins une partie de la surface extérieure de l'article, la composition du revêtement étant celle de l'une quelconque des revendications 1 à 6.

8. Article selon la revendication 7, dans lequel le substrat comprend un superalliage perfectionné à base de nickel pouvant être coulé comme monocristal par solidification directionnelle, comprenant, en poids, de 7 à 12% de chrome, de 1 à 5% de molybdène, de 3 à 5% de titane, de 3 à 5% d'aluminium, de 5 à 15% de cobalt, de 3 à 12% de tungstène, de 2 à 6% de tantale, de 0 à 10% de rhénium, de 0 à 2% de niobium, de 0 à 3% de vanadium, de 0 à 2% d'hafnium, le reste étant du nickel et les impuretés accidentelles, caractérisé en outre par l'absence pratique de carbone, de bore et de zirconium, l'alliage ayant un rapport Al:Ti dans la gamme allant de 0,5 à 1 tout en maintenant le rapport Cr:Al dans la gamme allant de 1,5 à 4.

9. Article selon la revendication 8, dans lequel le substrat est constitué, en poids, d'environ 9,3% de chrome, 7,5% de cobalt, 3,7% d'aluminium, 4% de tantale, 4,2% de titane, 1,5% de molybdène, 6% de tungstène, 0,5% de niobium, le reste étant du nickel et des impuretés accidentelles.

10. Article composite de fabrication comprenant:

(a) un substrat en superalliage à base de nickel et en superalliage eutectique à base de nickel, et

(b) une ou plusieurs zones composées, épaisses, en une pièce avec le substrat, les zones fournissant au moins une partie de la surface extérieure de l'article, la composition des zones étant celle de l'une quelconque des revendications 1 à 6.

11. Article selon la revendication 10, dans lequel le substrat comprend un superalliage perfectionné à base de nickel pouvant être coulé en monocristal par solidification directionnelle, comprenant, en poids, de 7 à 12% de chrome, de 1 à 5% de molybdène, de 3 à 5% de titane, de 3 à 5% d'aluminium, de 5 à 15% de cobalt, de 3 à 12% de tungstène, de 2 à 6% de tantale, de 0 à 10% de rhénium, de 0 à 2% de niobium, de 0 à 3% de vanadium, de 0 à 2% d'hafnium, le reste étant du nickel et des impuretés accidentelles, caractérisé en outre par l'absence pratique de carbone, de bore et de zirconium, l'alliage ayant un rapport Al:Ti dans la gamme allant de 0,5 à 1 tout en maintenant le rapport Cr:Al dans la gamme allant de 1,5 à 4.

12. Article selon la revendication 11, dans lequel le substrat comprend, en poids, environ 9,3% de chrome, 7,5% de cobalt, 3,7% d'aluminium, 4% de tantale, 4,2% de titane, 1,5% de molydbène, 6% de tungstène, 0,5% de niobium, le reste étant du nickel et des impuretés accidentelles.

13. Article selon la revendication 10, dans lequel le substrat est une aube fixe ou une aube tournante de moteur à turbine à gaz d'avion et le dépôt est sa partie d'extrémité.

## Fig 1

NiCoCrAlY COATING

INTERACTION ZONE

N-TYPE SUBSTRATE

## Fig 2

NiCoCrAlY COATING

INTERACTION ZONE

N-TYPE SUBSTRATE

1

## Fig 3

6MY-TYPE COATING

N-TYPE SUBSTRATE

## Fig 4

6MY-TYPE COATING

INTERACTION ZONE

N-TYPE SUBSTRATE

## Fig 5

6MYSI-TYPE COATING

N-TYPE SUBSTRATE

## Fig 6

6MYSi-TYPE COATING

INTERACTION ZONE

N-TYPE SUBSTRATE